# FASCICULE DE BREVET EUROPEEN

(11) **EP 2 607 742 B1**
(45) Date de publication et mention de la délivrance du brevet: **24.12.2014**
(21) Numéro de dépôt: 12191468.3
(22) Date de dépôt: 06.11.2012
(51) Int. Cl.: F16F 15/123

(54) **AMORTISSEUR DE TORSION POUR EMBRAYAGE A FRICTION DE VEHICULE AUTOMOBILE ET SES PROCÉDÉS DE FABRICATION ET DE DÉMONTAGE ASSOCIÉS**
TORSIONSDÄMPFER FÜR EINE REIBUNGSKUPPLUNG EINES KRAFTFAHRZEUGES UND SEINES ENTSPRECHENDE FERTIGUNGS- UND DEMONTAGEVERFAHREN.
TORSION DAMPER FOR A FRICTION CLUTCH OF A VEHICLE AND ITS CORRESPONDING ASSEMBLING AND DISASSEMBLY METHOD.

(30) Priorité: 21.12.2011 FR 1162182
(43) Date de publication de la demande: 26.06.2013
(73) Titulaire: Valeo Embrayages, 80009 Amiens Cedex 2 (FR)
(72) Inventeur: Dast, Pascal, 80750 FIENVILLERS (FR)

(56) Documents cités:
- FR-A1- 2 691 223
- FR-A2- 2 570 147

## Description

L'invention est relative à un amortisseur de torsion pour embrayage à friction de véhicule automobile.

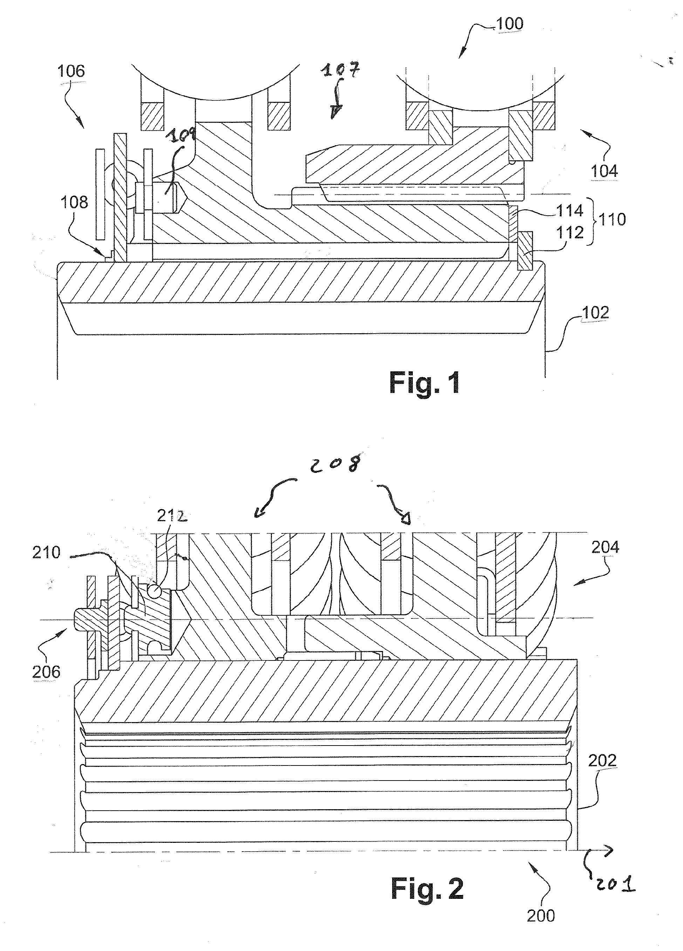

En référence à la figure 1, on connaît un amortisseur de torsion 100 pour embrayage à friction de véhicule automobile mettant en oeuvre un corps de moyeu 102, dénommé moyeu 102 par la suite, destiné à recevoir un arbre de transmission (non représenté). Le couplage entre ledit moyeu 102 et l'arbre de transmission s'effectue typiquement au moyen de cannelures de phasage dans lesquelles l'arbre de transmission peut s'engager.

Il est également connu d'agencer au moyeu 102 un amortisseur principal 104 et un amortisseur secondaire 106, dénommé par la suite préamortisseur 106, par l'intermédiaire d'un voile 107 du moyeu 102. A titre d'exemple, les demandes de brevets FR 2 770 267 déposée le 22 octobre 1998 par la société Mannesmann Sachs AG, FR 2 691 223 déposée le 14 mai 1992 et FR 2 689 191 déposée le 26 mars 1992 par la société Valéo décrivent de tels agencements.

Le document FR 269 1 223 est considéré comme étant l'état de l'art le plus proche et décrit toutes les caractéristiques du préambule des revendications 1, 7 et 8.

Afin de maintenir le préamortisseur 106 dans sa position, un sertissage 108 est typiquement utilisé pour solidariser le préamortisseur au moyeu 102 en combinaison avec des moyens 110 de maintien axial complémentaires comprenant notamment une butée 112 - typiquement un anneau - sur laquelle vient en appui une rondelle dentelée 114.

La présente invention résulte de la constatation qu'un tel agencement présente de nombreux inconvénients. Notamment les moyens de maintien 108, 112 et 114 sont situés de part et d'autre du voile 107, ce qui implique que l'amortisseur 100 requiert un espace particulièrement important pour son installation dans un véhicule. Or un tel espace n'est pas toujours disponible, notamment à cause de la proximité de doigts de diaphragme du mécanisme en position débrayée ou d'un tube guide fixé sur le carter de boite de vitesses et sur lequel vient coulisser une butée d'actionnement du mécanisme de l'embrayage (non représentés).

Par ailleurs, d'autres inconvénients résident dans le mouvement relatif de pivotement du voile 107 par rapport au moyeu 102 et au préamortisseur 106, qui génère des usures importantes de la rondelle dentelée 114, ou le coût et la complexité du montage ou du démontage d'un amortisseur 100 compte tenu du nombre élevé de pièces/opérations de montage devant être mises en oeuvre.

La présente invention vise à résoudre au moins un de ces inconvénients. Elle concerne un amortisseur de torsion pour embrayage à friction de véhicule automobile, ledit amortisseur comprenant un corps de moyeu de forme sensiblement cylindrique destiné à recevoir un arbre de transmission, ainsi qu'un amortisseur principal et un préamortisseur solidaire, d'une part, dudit moyeu et, d'autre part, d'un voile dudit moyeu, le préamortisseur comportant des pions ou des pattes engagés axialement dans le voile dudit moyeu pour la transmission d'un mouvement de rotation, **caractérisé en ce que** des gorges sont usinées, d'une part, à la surface des pions ou des pattes du préamortisseur et, d'autre part, à la surface du voile située en vis-à-vis du préamortisseur, un jonc étant logé sous contrainte mécanique dans lesdites gorges des pions ou des pattes et lesdites gorges du voile de façon à maintenir solidaire le préamortisseur et le voile.

Grâce à l'invention, le préamortisseur est maintenu solidaire du voile par des moyens de maintien simples, rapides à mettre en oeuvre et qui coopèrent pour former une liaison mécanique réversible à l'interface entre le préamortisseur et le voile.

Un tel agencement présente de nombreux avantages. Notamment, un amortisseur conforme à l'invention requiert un espace réduit pour son installation compte tenu de l'absence de moyens de maintien axial du préamortisseur de part et d'autre du moyeu. En d'autres termes, les moyens de maintien axial sont entièrement situés du côté du préamortisseur. Le côté de l'amortisseur présentant l'entrée du moyeu pour l'arbre de transmission est donc dépourvu de moyens de maintien axial du préamortisseur de telle sorte que cette entrée est particulièrement accessible.

Un autre avantage réside dans le nombre réduit de pièces nécessaires pour agencer l'amortisseur car ce dernier ne requiert plus de rondelle dentelée. De façon corollaire, le montage de l'amortisseur est simplifié et peut s'effectuer à l'aide d'un outillage simple.

De plus, les problèmes de frottements sont supprimés dans la mesure où le composant d'arrêt axial n'est plus disposé entre 2 pièces ayant un mouvement relatif en rotation, ce qui entraîne une durée de fonctionnement et une fiabilité accrues pour l'amortisseur.

Finalement, il convient de noter qu'un amortisseur conforme à l'invention présente une robustesse suffisante pour arrêter un déplacement axial du préamortisseur, y compris lors des chocs robustes subis par l'amortisseur lors de l'accostage de l'arbre de boîte dans les cannelures de friction.

Un autre avantage réside dans le démontage aisé et non destructif des pièces, ce qui permet de faciliter la rénovation ou le recyclage du produit. La rénovation, qui consiste à remettre en état de fonctionnement un produit usagé pour le revendre ensuite, est de fait un marché important pour les embrayages de véhicules industriels tandis que le recyclage devient, dans certains pays, un impératif réglementaire.

Dans une réalisation, les gorges usinées à la surface des pions ou des pattes et les gorges usinées à la surface du voile s'étendent radialement, par rapport à l'axe du moyeu, dans un plan pratiquement identique.

Selon une réalisation, l'amortisseur comprend un espacement dédié au passage d'un outil de démontage du jonc, l'entrée de l'espacement dans l'amortisseur étant située sur un côté de l'amortisseur présentant l'entrée de l'amortisseur destinée à recevoir l'arbre de transmission.

Dans une réalisation, l'amortisseur comprend un élément amovible recouvrant le jonc dans au moins une des gorges du préamortisseur ou du voile.

Selon une réalisation, le jonc présente des extrémités situées à l'extérieur des gorges permettant de déloger le jonc desdites gorges par une contrainte mécanique sur ces extrémités.

Dans une réalisation, une première extrémité du jonc est en appui sur une seconde extrémité du jonc de telle sorte que cet appui est renforcé lorsque le jonc est soumis à une force centrifuge générée par des rotations du moyeu.

L'invention concerne également un procédé de fabrication d'un amortisseur de torsion pour embrayage à friction de véhicule automobile conforme à l'une des réalisations précédentes, caractérisé en ce qu'il comprend l'étape de loger un jonc sous contrainte mécanique dans des gorges usinées, d'une part, à la surface des pions ou des pattes du préamortisseur et, d'autre part, à la surface du voile située en vis-à-vis du préamortisseur, de façon à maintenir solidaire le préamortisseur et le voile.

Finalement l'invention concerne également un procédé de démontage d'un amortisseur de torsion pour embrayage à friction de véhicule automobile conforme à l'une des réalisations précédentes, caractérisé en ce que, un jonc étant logé sous contrainte mécanique dans des gorges usinées, d'une part, à la surface des pions ou des pattes du préamortisseur et, d'autre part, à la surface du voile située en vis-à-vis du préamortisseur, il comprend l'étape d'utiliser un outil muni d'un arbre à came pour déloger le jonc, et de désolidariser le préamortisseur du voile par un mouvement de pivotement dudit outil.

D'autres avantages de l'invention apparaîtront à la lumière de la description d'une réalisation de l'invention effectuée ci-dessous, à titre illustratif et non limitatif, en référence aux figures ci-jointes sur lesquelles:
- La figure 1, déjà décrite, est une vue en coupe d'un amortisseur selon l'art antérieur,
- la figure 2 est une vue en coupe d'un amortisseur selon une réalisation de l'invention,
- la figure 3 est une vue en perspective d'un préamortisseur pour amortisseur selon une réalisation de l'invention,
- la figure 4 est une vue en perspective d'un voile pour amortisseur selon une réalisation de l'invention,
- la figure 5 est une vue en perspective d'un amortisseur selon une réalisation de l'invention,
- les figures 6 et 7 représentent une variante de l'invention mettant en oeuvre une rondelle de maintien,
- les figures 8, 9 et 10 représentent une variante de l'invention mettant en oeuvre un outil de démontage dédié à un amortisseur selon l'invention, et
- les figures 11, 12 et 13 représentent une variante de l'invention mettant en oeuvre un élément élastique de maintien pouvant être démonté sans outil dédié.

Dans la description ci-dessous, les éléments identiques ou ayant des fonctions similaires sur différentes figures peuvent avoir une même référence sur ces différentes figures.

En référence à la figure 2 est représenté un amortisseur 200 de torsion pour embrayage à friction de véhicule automobile conforme à une réalisation de l'invention. Un tel amortisseur de torsion comprend notamment un corps de moyeu 202, dénommé moyeu 202 par la suite, destiné à recevoir un arbre de transmission (non représenté) à l'aide de cannelures de phasage permettant le couplage entre ledit moyeu 202 et l'arbre de transmission.

Le moyeu 202 est agencé à un amortisseur 204 principal et à un préamortisseur 206 à l'aide d'un voile 208 du moyeu 202 permettant par ailleurs de maintenir fixe le préamortisseur 206 en translation selon l'axe 201 du moyeu 202.

A cet effet des pions 210 du préamortisseur 206, engagés dans le voile 208, sont solidaires d'un jonc 212 maintenu sous contrainte mécanique dans des gorges situées, d'une part, à la surface des pions 210 et, d'autre part, à la surface du voile 208 située en vis-à-vis du préamortisseur 206.

Par cette contrainte mécanique, le jonc 212 maintient en contact le préamortisseur 206 et le voile 208 de telle sorte que les mouvements du préamortisseur en translation selon l'axe 201 sont bloqués, les pions 210 permettant en combinaison de supprimer tout mouvement relatif du préamortisseur 206 par rapport au voile 208 comme décrit ci-dessous.

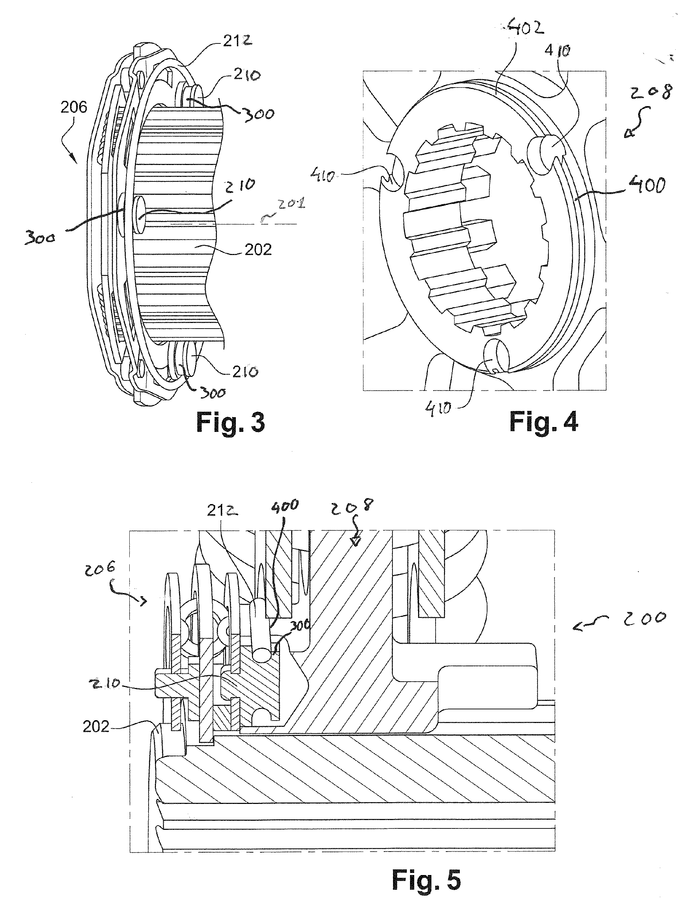

En référence aux figures 3 et 4, le préamortisseur 206 et le voile 208 sont représentés dans des vues en perspective mettant en relief les gorges respectives 300 et 400 situées, respectivement, sur les pions 210 ou à la surface 402 du voile 208 située en vis-à-vis du préamortisseur 206. Plus précisément cette surface 402 est située sur un premier latéral du voile 208 situé du côté du préamortisseur 206, par opposition au second latéral du voile 208 situé du côté de l'entrée du moyeu.

Dans cette configuration de montage, l'agencement du préamortisseur 206 au voile 208 est obtenu en amenant le jonc 212 contre le chanfrein du voile 208 et en engageant les pions 210 dans leurs logements dédiés 410.

A ce stade, le jonc s'ouvre sous la contrainte mécanique, en prenant appui sur le rebord ou talon des gorges 300 des pions 210, jusqu'à obtenir une déformation suffisante pour permettre son passage dans les gorges 400.

Dans l'agencement résultant après une telle opération représenté à la figure 5, le jonc 212 est simultanément logé dans les gorges 300 du préamortisseur 206 et dans les gorges 400 du voile 208, ces gorges 300 et 400 se situant radialement dans un même plan perpendiculaire à l'axe du moyeu 202.

Par ailleurs il convient de noter que les pions 210, et leurs emplacements dédiés 410, sont répartis autour de cet axe 201 de façon à maintenir le préamortisseur 206 solidaire du voile 208 vis-à-vis de tout mouvement en rotation/pivotement autour de l'axe 201. Ainsi le préamortisseur 206 est entièrement solidaire du voile 208 et les mouvements relatifs entre ces deux éléments sont supprimés.

La présente invention est susceptible de nombreuses variantes. Notamment le jonc 212 peut avoir des formes diverses, par exemple plate ou torique, et s'étendre plus ou moins radialement autour de l'axe du moyeu.

Le jonc peut également être remplacé par tout élément mécanique élastique, c'est-à-dire mécaniquement déformable de façon réversible, permettant de maintenir une contrainte mécanique à l'interface entre le préamortisseur et le voile de façon à les maintenir en contact. Typiquement, cette contrainte mécanique peut être obtenue, par exemple, par clipsage, par encliquetage ou par emboîtage élastique du jonc 212 dans les gorges 300 et 400.

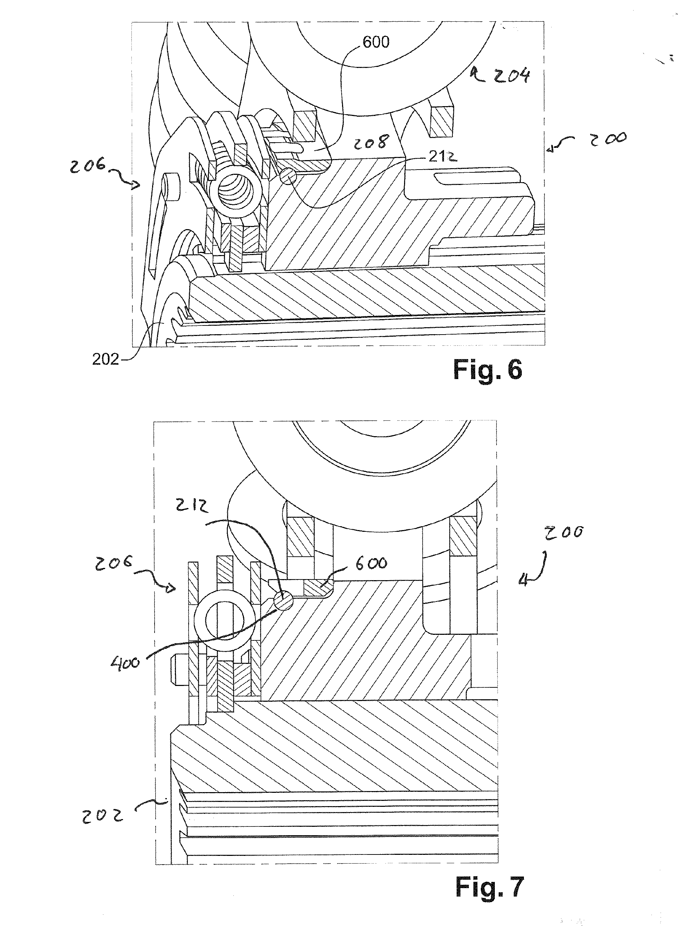

Selon une réalisation de l'invention représentée aux figures 6 (en perspective) et 7 (en coupe), un amortisseur 200 comprend une rondelle anti-centrifugation 600 permettant de maintenir le jonc 212 de sa position contrainte, en l'espèce dans la gorge 400 du voile, en dépit de forces centrifuges tendant à déloger le jonc 212.

De fait le jonc 212 est amené à subir des mouvements de rotation rapide qui pourraient entraîner l'éjection du jonc 212 de la gorge 400 par effet de la force centrifuge générée lors de ces mouvements. C'est pourquoi cette rondelle anti-centrifugation 600 (par exemple en plastique ou en acier) est maintenue, typiquement par clipsage réversible, de façon à fermer partiellement le logement du jonc 212.

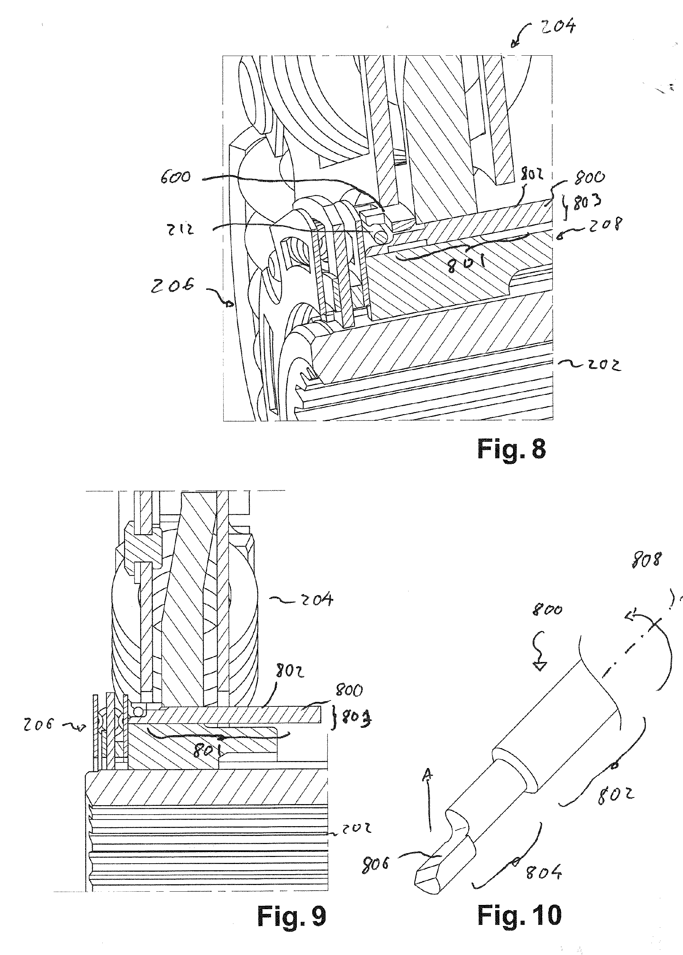

Afin de permettre un démontage simple et rapide du préamortisseur 206 vis-à-vis du voile 208, ce dernier peut présenter un emplacement, ou passage, 801 destiné à recevoir un outil de démontage dédié tel qu'un tournevis à came 800 (figures 8, 9 et 10).

Un tel outil 800 présente un manche 802 allongé permettant d'atteindre le jonc 212 à partir d'une entrée 803 présente sur la partie latérale du voile située du côté de l'entrée du moyeu 202. De fait, ce latéral du voile 208 est simple d'accès tandis que l'autre latéral du voile 208 présente le préamortisseur qui rend plus complexe l'accès au jonc 212.

Par ailleurs, l'outil 800 présente une extrémité profilée 804 permettant de glisser une surface 806 d'appui sous le jonc 212 et de le déplacer en translation radiale par rapport à son axe 808 par simple rotation du manche 802 selon cet axe 808. Ainsi le jonc 212 peut subir une contrainte mécanique suffisante pour le déloger des gorges 300 et/ou 400, voire pour déclipser la rondelle anti-centrifugation 600 éventuellement présente.

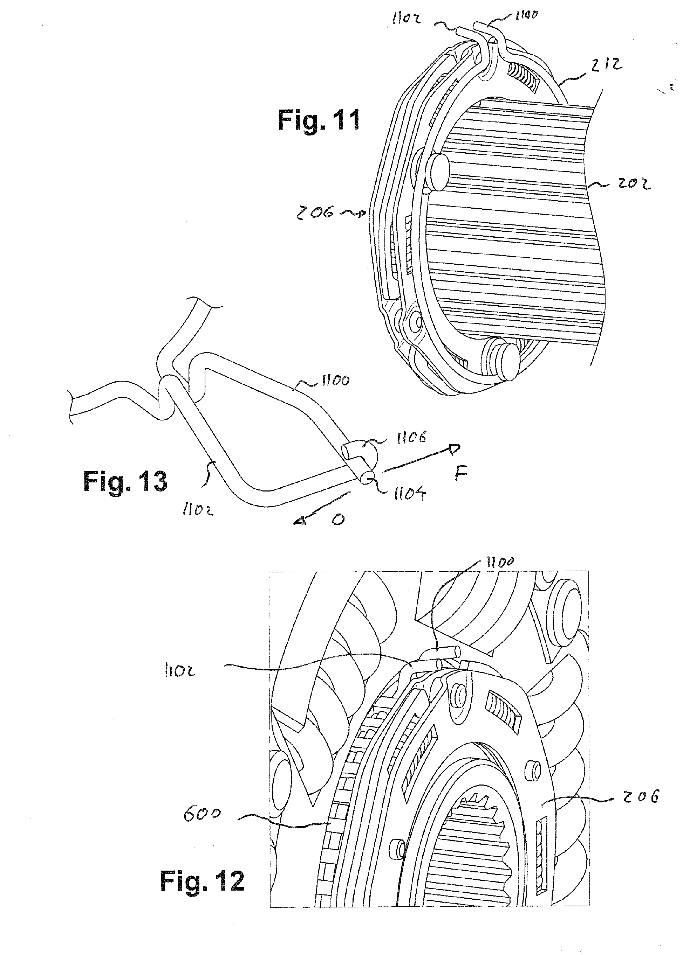

Selon une variante visant à prévenir l'utilisation d'un tel outil dédié 800, le jonc 212 présente des extrémités ouvertes sous la forme de brins 1100 et 1102 (figure 11) permettant de déformer aisément le jonc par une simple pression visant à écarter ces brins 1100 et 1102.

Afin d'écarter le risque d'une ouverture des brins 1100 et 1102 sous l'effet de la force centrifuge, ces derniers peuvent être précontraints entre eux de telle sorte que la force de centrifugation tend à maintenir cette précontrainte. Par exemple, comme représenté à la figure 13, une extrémité 1104 du brin 1100 peut être logée dans une courbure de l'extrémité 1106 du brin 1102 de telle sorte que la force centrifuge F tende à maintenir cette extrémité 1104 dans la courbure de l'extrémité 1106.

La présente invention est susceptible de nombreuses variantes. Par exemple, il convient de noter que les disques de friction décrits dans les figures ci-joints sont du type dénommés « dissymétriques », un tel disque dissymétrique (élément d'entrée) étant relié à des rondelles de guidage qui entraînent, via des ressorts du voile, les cannelures intérieures du corps de moyeu (élément de sortie). Or l'invention s'applique également à d'autres types de disques de friction, notamment du type « symétriques » qui diffère notamment d'un disque dissymétrique par l'utilisation d'une bride (dénommée moyeu intermédiaire) pour transmettre un mouvement aux cannelures intérieures le corps de moyeu.

Par ailleurs, le préamortisseur 206 comporte des pions engagés axialement dans le voile du moyeu 202 pour la transmission d'un mouvement de rotation mais, dans d'autres variantes, ces pions peuvent être remplacés par différents types de pattes effectuant la même fonction.

## Revendications

1. Amortisseur (200) de torsion pour embrayage à friction de véhicule automobile, ledit amortisseur (200) comprenant un corps de moyeu (202) de forme sensiblement cylindrique, destiné à recevoir un arbre de transmission, ainsi qu'un amortisseur principal (204) et un préamortisseur (206) solidaire, d'une part, dudit moyeu (202) et, d'autre part, d'un voile (208) dudit moyeu (202), le préamortisseur (206) comportant des pions ou des pattes (210) engagés axialement dans le voile (208) dudit moyeu (202) pour la transmission d'un mouvement de rotation, **caractérisé en ce que** des gorges (300, 400) sont usinées, d'une part, à la surface des pions ou des pattes (210) du préamortisseur (206) et, d'autre part, à la surface du voile (208) située en vis-à-vis du préamortisseur (206), un jonc (212) étant logé sous contrainte mécanique dans lesdites gorges (300) des pions ou des pattes (210) et lesdites gorges (400) du voile de façon à maintenir solidaire le préamortisseur (206) et le voile (208).

2. Amortisseur (200) selon la revendication 1 **caractérisé en ce que** les gorges (300) usinées à la surface des pions ou des pattes (210) et les gorges (400) usinées à la surface du voile (208) s'étendent radialement, par rapport à l'axe du moyeu (201), dans un plan pratiquement identique.

3. Amortisseur (200) selon la revendication 1 ou 2 **caractérisé en ce qu'il** comprend un espacement (801) dédié au passage d'un outil (800) de démontage du jonc (212), l'entrée (803) dudit l'espacement dans l'amortisseur (200) étant située sur un côté de l'amortisseur présentant l'entrée du moyeu (202) destinée à recevoir l'arbre de transmission.

4. Amortisseur (200) selon l'une des revendications précédentes **caractérisé en ce qu'il** comprend un élément amovible (600) recouvrant le jonc (212) dans au moins une des gorges (300, 400) du préamortisseur ou du voile.

5. Amortisseur (200) selon l'une des revendications précédentes **caractérisé en ce que** le jonc (212) présente des extrémités (1100, 1102) situées à l'extérieur des gorges (300, 400) permettant de déloger le jonc (212) desdites gorges (300, 400) par une contrainte mécanique sur ces extrémités (1100, 1102).

6. Amortisseur (200) selon la revendication 5 **caractérisé en ce qu'**une première extrémité (1100) du jonc (212) est en appui sur une seconde extrémité (1102) du jonc (212) de telle sorte que cet appui est renforcé lorsque le jonc (212) est soumis à une force centrifuge (F) générée par des rotations du moyeu (202).

7. Procédé de fabrication d'un amortisseur (200) de torsion pour embrayage à friction de véhicule automobile conforme à l'une des revendications 1 à 6, **caractérisé en ce qu'**il comprend l'étape de loger un jonc (212) sous contrainte mécanique dans des gorges (300, 400) usinées, d'une part, à la surface des pions ou des pattes (210) du préamortisseur (206) et, d'autre part, à la surface du voile (208) située en vis-à-vis du préamortisseur (206), de façon à maintenir solidaire le préamortisseur (206) et le voile (208).

8. Procédé de démontage d'un amortisseur (200) de torsion pour embrayage à friction de véhicule automobile conforme à l'une des revendications 1 à 6, **caractérisé en ce que**, un jonc (212) étant logé sous contrainte mécanique dans des gorges (300, 400) usinées, d'une part, à la surface des pions ou des pattes (210) du préamortisseur (206) et, d'autre part, à la surface du voile (208) située en vis-à-vis du préamortisseur (206), il comprend l'étape d'utiliser un outil (800) muni d'un arbre à came (804) pour déloger le jonc (212), et de désolidariser le préamortisseur (206) du voile (208) par un mouvement de pivotement dudit outil (800).

## Patentansprüche

1. Torsionsdämpfer (200) für eine Reibungskupplung eines Kraftfahrzeugs, wobei der Dämpfer (200) einen Nabenkörper (202) von im Wesentlichen zylindrischer Form, der dazu bestimmt ist, eine Antriebswelle aufzunehmen, sowie einen Hauptdämpfer (204) und einen Vordämpfer (206) enthält, der einerseits mit der Nabe (202) und andererseits mit einer Scheibe (208) der Nabe (202) fest verbunden ist, wobei der Vordämpfer (206) Zapfen oder Klauen (210) aufweist, die zur Übertragung einer Drehbewegung axial in die Scheibe (208) der Nabe (202) eingreifen, **dadurch gekennzeichnet, dass** Rillen (300, 400) einerseits an der Oberfläche der Zapfen oder der Klauen (210) des Vordämpfers (206) und andererseits an der gegenüber dem Vordämpfer (206) befindlichen Oberfläche der Scheibe (208) eingearbeitet sind, wobei ein Ring (212) unter mechanischer Spannung in die Rillen (300) der Zapfen oder der Klauen (210) und die Rillen (400) der Scheibe eingelegt wird, um den Vordämpfer (206) und die Scheibe (208) fest miteinander verbunden zu halten.

2. Dämpfer (200) nach Anspruch 1, **dadurch gekennzeichnet, dass** die an der Oberfläche der Zapfen oder der Klauen (210) eingearbeiteten Rillen (300) und die an der Oberfläche der Scheibe (208) eingearbeiteten Rillen (400) sich bezüglich der Achse der Nabe (202) radial in einer praktisch gleichen Ebene erstrecken.

3. Dämpfer (200) nach Anspruch 1 oder 2, **dadurch gekennzeichnet, dass** er einen Zwischenraum (801) enthält, der für den Durchgang eines Werkzeugs (800) zum Ausbau des Rings (212) bestimmt ist, wobei der Eingang (803) des Zwischenraums im Dämpfer (200) sich auf einer den zur Aufnahme der Antriebswelle bestimmten Eingang der Nabe (202) aufweisenden Seite des Dämpfers befindet.

4. Dämpfer (200) nach einem der vorhergehenden Ansprüche, **dadurch gekennzeichnet, dass** er ein entfernbares Element (600) enthält, das den Ring (212) in mindestens einer der Rillen (300, 400) des Vordämpfers oder der Scheibe bedeckt.

5. Dämpfer (200) nach einem der vorhergehenden Ansprüche, **dadurch gekennzeichnet, dass** der Ring (212) außerhalb der Rillen (300, 400) befindliche Enden (1100, 1102) aufweist, die es ermöglichen, den Ring (212) durch eine mechanische Belastung dieser Enden (1100, 1102) aus den Rillen (300, 400) zu entfernen.

6. Dämpfer (200) nach Anspruch 5, **dadurch gekennzeichnet, dass** ein erstes Ende (1100) des Rings (212) auf einem zweiten Ende (1102) des Rings (212) derart in Auflage ist, dass diese Auflage verstärkt wird, wenn der Ring (212) einer durch Drehungen der Nabe (202) erzeugten Zentrifugalkraft (F) ausgesetzt wird.

7. Verfahren zur Herstellung eines Torsionsdämpfers (200) für eine Reibungskupplung eines Kraftfahrzeugs nach einem der Ansprüche 1 bis 6, **dadurch gekennzeichnet, dass** es den Schritt des Einlegens eines Rings (212) unter mechanischer Spannung in Rillen (300, 400) enthält, die einerseits an der Oberfläche der Zapfen oder der Klauen (210) des Vordämpfers (206) und andererseits an der gegenüber dem Vordämpfer (206) befindlichen Oberfläche der Scheibe (208) eingearbeitet sind, um den Vordämpfer (206) und die Scheibe (208) fest miteinander verbunden zu halten.

8. Verfahren zum Ausbau eines Torsionsdämpfers (200) für eine Reibungskupplung eines Kraftfahrzeugs nach einem der Ansprüche 1 bis 6, **dadurch gekennzeichnet, dass** es, wenn ein Ring (212) unter mechanischer Spannung in Rillen (300, 400) eingelegt ist, die einerseits an der Oberfläche der Zapfen oder der Klauen (210) des Vordämpfers (206) und andererseits an der gegenüber dem Vordämpfer (206) befindlichen Oberfläche der Scheibe (208) eingearbeitet sind, den Schritt der Verwendung eines Werkzeugs (800) enthält, das mit einer Nockenwelle (804) versehen ist, um den Ring (212) zu entfernen und den Vordämpfer (206) durch eine Schwenkbewegung des Werkzeugs (800) von der Scheibe (208) zu lösen.

## Claims

1. Torsion damper (200) for a motor vehicle friction clutch, the said damper (200) comprising a hub (202) body of substantially cylindrical shape, intended to receive a transmission shaft, and a main damper (204) and a predamper (206) which is secured, on the one hand, to the said hub (202) and, on the other hand, to a disc (208) of the said hub (202), the predamper (206) comprising pins or lugs (210) engaged axially in the disc (208) of the said hub (202) for the transmission of a rotational movement, **characterized in that** grooves (300, 400) are machined, on the one hand, on the surface of the pins or the lugs (210) of the predamper (206) and, on the other hand, on the surface of the disc (208) that is situated facing the predamper (206), a snap ring (212) being housed under mechanical stress in the said grooves (300) of the pins or the lugs (210) and the said grooves (400) of the disc so as to secure the predamper (206) and the disc (208).

2. Damper (200) according to Claim 1, **characterized in that** the grooves (300) machined on the surface of the pins or the lugs (210) and the grooves (400) machined on the surface of the disc (208) extend radially, with respect to the axis of the hub (202), in a virtually identical plane.

3. Damper (200) according to Claim 1 or 2, **characterized in that** it comprises a space (801) dedicated for the passage of a tool (800) for disassembling the snap ring (212), the inlet (803) of the said space in the damper (200) being situated on a side of the damper having the inlet of the hub (202) that is intended to receive the transmission shaft.

4. Damper (200) according to one of the preceding claims, **characterized in that** it comprises a removable element (600) covering the snap ring (212) in at least one of the grooves (300, 400) of the predamper or of the disc.

5. Damper (200) according to one of the preceding claims, **characterized in that** the snap ring (212) has ends (1100, 1102) situated outside the grooves (300, 400) making it possible to dislodge the snap ring (212) from the said grooves (300, 400) by a mechanical stress on these ends (1100, 1102).

6. Damper (200) according to Claim 5, **characterized in that** a first end (1100) of the snap ring (212) bears on a second end (1102) of the snap ring (212) such that this bearing is reinforced when the snap ring (212) is subjected to a centrifugal force (F) generated by rotations of the hub (202).

7. Method for manufacturing a torsion damper (200) for a motor vehicle friction clutch according to one of Claims 1 to 6, **characterized in that** it comprises the step of housing a snap ring (212) under mechanical stress in grooves (300, 400) machined, on the one hand, on the surface of the pins or the lugs (210) of the predamper (206) and, on the other hand, on the surface of the disc (208) that is situated facing the predamper (206), so as to secure the predamper (206) and the disc (208).

8. Method for disassembling a torsion damper (200) for a motor vehicle friction clutch according to one of Claims 1 to 6, **characterized in that**, with a snap ring (212) being housed under mechanical stress in grooves (300, 400) machined, on the one hand, on the surface of the pins or the lugs (210) of the predamper (206) and, on the other hand, on the surface of the disc (208) that is situated facing the predamper (206), it comprises the step of using a tool (800) provided with a camshaft (804) for dislodging the snap ring (212), and of detaching the predamper (206) from the disc (208) by a pivoting movement of the said tool (800).
